(19) Europäisches Patentamt
European Patent Office
Office européen des brevets

(11) EP 4 389 783 A1

(12) EUROPEAN PATENT APPLICATION

(43) Date of publication:
**26.06.2024 Bulletin 2024/26**

(21) Application number: **22215204.3**

(22) Date of filing: **20.12.2022**

(51) International Patent Classification (IPC):
***C08F 110/06*** *(2006.01)*

(52) Cooperative Patent Classification (CPC):
(C-Sets available)
C08F 4/65912; C08F 4/65916; C08F 110/06;
C08F 2410/05 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **LESKINEN, Pauli**
  **06101 Porvoo (FI)**
- **WANG, Jingbo**
  **4021 Linz (AT)**
- **GAHLEITNER, Markus**
  **4021 Linz (AT)**
- **BERNREITNER, Klaus**
  **4021 Linz (AT)**

(74) Representative: **Dehns**
**St. Bride's House**
**10 Salisbury Square**
**London EC4Y 8JD (GB)**

# (54) CATALYST TRANSITION PROCESS

(57) A process for transitioning between two different catalysts during the production of polypropylene homo- or copolymers in a continuous multistage polymerisation reaction , the process comprising the steps of:
a) polymerising propylene and optionally comonomers in a multi stage polymerisation reactor system comprising a prepolymerization reactor, a subsequent slurry reactor and thereafter a gas phase reactor in the presence of a first catalyst;
b) discontinuing the feed of the first catalyst to the prepolymerization reactor;
c) subsequently introducing, propylene, optionally comonomers, and a second catalyst into the prepolymerization reactor, and further introducing an aluminium alkyl into the polymerization reactor simultaneously with the introduction of the second catalyst;
d) polymerising propylene and optionally comonomers in the multistage polymerisation reactor system in the presence of the second catalyst;

wherein the first catalyst is a Ziegler-Natta catalyst and the second catalyst is a single site catalyst; and
wherein the amount of aluminium alkyl fed in step c) is 0.5 to 10.0 g per ton of total propylene fed into the prepolymerisation reactor and the slurry reactor in steps c) and d).

EP 4 389 783 A1

(52) Cooperative Patent Classification (CPC): (Cont.)

C-Sets
**C08F 110/06, C08F 2/001;**
**C08F 110/06, C08F 4/6492;**
**C08F 110/06, C08F 4/651;**
**C08F 110/06, C08F 4/653;**
**C08F 110/06, C08F 4/6546;**
**C08F 110/06, C08F 4/6548;**
**C08F 110/06, C08F 4/65927;**
C08F 110/06, C08F 2500/05, C08F 2500/12,
C08F 2500/18, C08F 2500/24, C08F 2500/33,
C08F 2500/34, C08F 2500/35

## Description

This invention relates to a process by which the polymerisation taking place in a multistage reactor system can be switched from one using a Ziegler Natta catalyst to one using a single site catalyst, such as a metallocene catalyst. In particular, the invention addresses the problem of restarting the polymerisation reaction after the switch has occurred as catalyst poisons that remain after the Ziegler Natta (ZN) polymerisation can limit the catalyst activity of the single site catalyst.

## Background

During the production of olefin polymers in a commercial reactor it is often necessary to transition from one type of catalyst system producing polymers having certain properties and characteristics to another catalyst system capable of producing polymers of different chemical and/or physical attributes. In the past, to accomplish an effective transition between incompatible catalysts, the first catalysed olefin polymerization process was stopped by various techniques known in the art. The reactor was then emptied, cleaned, recharged and a second catalyst was introduced into a reactor. Such catalyst conversions are time consuming and costly because of the need for a reactor shut-down for an extended period of time during transition.

Another method of transition included discontinuing the polymerization of the first catalyst system to stop polymerization and introducing a second catalyst system into the polymerization reactor. However, stopping the first catalyst system feed into the reactor does not immediately stop polymerization reactions occurring within the reactor. The two catalysts might therefore simultaneously produce polymer for a period of time which results in the formation of an "off-specification" product for a potentially extended duration. The production of the off-spec product is costly and time consuming.

It is well known that an active Ziegler-Natta catalyst may "poison" an active metallocene catalyst and hence the transition from one to the other is typically complicated. For example, to change from a Ziegler-Natta catalyst to a metallocene catalyst, or vice versa, normally requires a long transition period. Moreover, the polyolefins produced during this transition period will continuously change in properties. If the transition from one catalyst system to another requires substantial changes in reactor conditions, the risks of encountering production problems and producing polymers having extreme properties are high.

There is a need, therefore, for a new transitioning process that requires less reactor down-time and enables transition from a ZN to single site catalyst without problems such as reactor fouling. Such a process should minimise the transition time and hence allow the production of target second polymer product as soon as possible. Importantly, the effect of catalyst poisons on the single site catalyst should be minimised.

The possibility of transitioning between catalysts is described in the literature. EP-A-0751965 describes a process for transitioning from a polymerization reaction catalysed by a first catalyst to one catalysed by a second catalyst comprising a metallocene catalyst, wherein said first and second catalysts are incompatible. The process requires that the feed of the first catalyst is discontinued before an irreversible catalyst killer is used to stop catalytic activity. Examples of the catalyst killer are CO and $CO_2$.

In EP-A-1578808 a process for transitioning from a first polymerization reaction conducted in the presence of a first catalyst system to a second polymerization reaction conducted in the presence of a second catalyst system is described. As well as careful control of the fluidised bed set-up, the invention uses an alkoxylated amide or amine between steps.

EP-A-1620472 describes a polymerization process in which a catalyst killer is used to terminate a first polymerization reaction allowing the introduction of a second catalyst system to the polymerization reactor in the presence of the catalyst killer. Exemplary catalyst killers include one or more compounds selected from the group consisting of water, oxygen, alcohols, glycols, phenols, ethers, carbonyl compounds such as ketones, aldehydes, carboxylic acids, esters, fatty acids, alkynes such as acetylene, amines, nitrites, nitrous compounds, pyridine, pyroles, carbonylsulfide (COS), mercaptans, derivatives thereof, or any mixtures or combinations thereof.

EP-A-3237458 describes a process for transitioning from a first continuous polymerization reaction to a second polymerization reaction wherein the catalysts are incompatible. A catalyst killer is used to deactivate the first catalyst

EP-A-3394111 claims a process for transitioning from a first continuous polymerization in a gas phase reactor conducted in the presence of a metallocene catalyst to a second polymerization conducted in the presence of a Ziegler-Natta catalyst in the gas phase reactor wherein the metallocene catalyst and the Ziegler-Natta catalyst are incompatible. Cyclohexylamine is used to deactivate the metallocene catalyst before an organometallic compound is introduced and reacted with cyclohexylamine.

EP-A-1182216 relates to a method for transitioning between two different catalysts in olefin polymerisations. The process transitions between a chromium oxide based catalyst and a metallocene catalyst in the absence of any agent which deactivates or kills the catalyst.

WO 2010086392 describes a method for transitioning between two different catalysts during the production of polypropylene homo- or copolymers in a continuous slurry/gas phase polymerization reaction with a prior prepolymerization reaction, the method comprises the steps of:

(a) discontinuing the feed of the first catalyst into the prepolymerization reactor; and then

(b) introducing the second catalyst into the prepolymerization reactor,

(c) adapting the reaction conditions in the prepolymerization reactor, the slurry reactor and in the subsequent gas phase reactor,
wherein the transition is performed between a Ziegler-Natta catalyst and an self-supported, solid metallocene catalyst, prepared by using an emulsion/solidification technology or vice versa, whereby the transition is performed in the absence of any additional agent which deactivates or kills the catalyst.

A significant problem with transitioning from ZN to single site catalysis is the slow start of the single site catalysed polymerisation after the transition. The main reason for the slow start are catalyst poisons that are present from the ZN polymerisation. These poisons include the external donor that is used in the ZN polymerisation and any antistatic agent that might be present from the ZN reaction. Other poisons include water and oxygen. Single site catalysts are very sensitive to catalyst poisons, mainly due to the low amount of active metal in such catalysts, and the fact that no external co-catalyst is used in a single site catalysed process.

The present inventors have realised that the addition of an aluminium alkyl scavenger after the first ZN polymerisation can significantly reduce the effect of these poisons allowing the rapid production of an "on specification" second polymer product. The presence of this aluminium alkyl additive overcomes the negative effects of any catalyst poisons that might be present.

In one embodiment, the invention requires the use of an aluminium alkyl flush between the polymerisation steps to reduce or eliminate the effects of catalyst poisons on the single site catalyst. In a second embodiment, the invention uses an aluminium alkyl feed shortly before or simultaneously with the addition of the second catalyst to significantly reduce the effect of these poisons. Optionally, both of these embodiments can be used together.

## Summary of Invention

Viewed from one aspect the invention provides a process for transitioning between two different catalysts during the production of polypropylene homo- or copolymers in a continuous multistage polymerisation reaction, the process comprising the steps :

a) polymerising propylene and optionally comonomers in a multistage polymerisation reactor system comprising a prepolymerization reactor, a subsequent slurry reactor and thereafter a gas phase reactor in the presence of a first catalyst;

b) discontinuing the feed of the first catalyst to the prepolymerization reactor;

c) subsequently introducing propylene, optionally comonomers, and a second catalyst into the prepolymerization reactor, and further introducing an aluminium alkyl into the polymerization reactor simultaneously with the introduction of the second catalyst;

d) polymerising propylene and optionally comonomers in the multistage polymerisation reactor system in the presence of the second catalyst;

wherein the first catalyst is a Ziegler-Natta catalyst and the second catalyst is a single site catalyst; and

wherein the amount of aluminium alkyl fed in step c) is 0.5 to 10.0 g per ton, i.e. 0.5 to 10.0 g per 1000 kg, of total propylene fed in the prepolymerisation reactor and the slurry reactor in steps c) and d).

Viewed from another aspect the invention provides a process for transitioning between two different catalysts during the production of polypropylene homo- or copolymers in a continuous multistage polymerisation reaction , the method comprising the steps of:

a) polymerising propylene and optionally comonomers in a multistage polymerisation reactor system comprising a

prepolymerization reactor, a subsequent slurry reactor and thereafter a gas phase reactor in the presence of a first catalyst;

b) discontinuing the feed of the first catalyst into the prepolymerization reactor;

c-1) introducing an aluminium alkyl compound into the prepolymerisation reactor;

c-2) subsequently introducing propylene, optionally comonomers, and a second catalyst into the prepolymerization reactor;

d) polymerising propylene and optionally comonomers in a multi stage polymerisation reactor system in the presence of the second catalyst;

wherein the first catalyst is a Ziegler-Natta catalyst and the second catalyst is a single site catalyst; and

wherein the amount of aluminium alkyl fed in step c-2) is 0.5 to 10.0 g per ton i.e. 0.5 to 10.0 g per 1000 kg, of total propylene fed in the prepolymerisation reactor and the slurry reactor in steps c-2) and d).

In these embodiments it can also be considered that the amount of aluminium alkyl fed is 0.5 to 10.0 g/h per ton, i.e. 0.5 to 10.0 g per 1000 kg, of total propylene fed/h in the prepolymerisation reactor and the slurry reactor in steps c) and d).

Viewed from a second aspect the invention provides a process for transitioning between two different catalysts during the production of polypropylene homo- or copolymers in a continuous multistage polymerisation reaction, the method comprising the steps of:

a) polymerising propylene and optionally comonomers in a multistage polymerisation reactor system comprising a prepolymerization reactor, a subsequent slurry reactor and thereafter a gas phase reactor in the presence of a first catalyst;

b) discontinuing the feed of the first catalyst to the prepolymerization reactor;

c) subsequently introducing propylene, optionally comonomers, and a second catalyst into the prepolymerization reactor;

d) polymerising propylene and optionally comonomers in the multi stage polymerisation reactor system in the presence of the second catalyst;

wherein the first catalyst is a Ziegler-Natta catalyst and the second catalyst is a single site catalyst;

wherein between steps b) and c), propylene and an aluminium alkyl are introduced into the prepolymerisation reactor where the amount of aluminium alkyl is 100 to 300 g/ton i.e. 100 to 300 g per 1000 kg of propylene introduced in this step i.e. propylene fed into the prepolymerisation reactor between steps b) and c).

It is preferred that the amount of aluminium alkyl fed after step b) is 0.5 to 10.0 g per ton i.e. 0.5 to 10.0 g per 1000 kg, of total propylene fed in the prepolymerisation reactor and the slurry reactor in steps c) and d).

Alternatively viewed therefore, the invention provides a process for transitioning between two different catalysts during the production of a polypropylene homo- or copolymers in a continuous multistage polymerisation reaction, the method comprising the steps of:

a) polymerising propylene and optionally comonomers in a multistage polymerisation reactor system comprising a prepolymerization reactor, a subsequent slurry reactor and thereafter a gas phase reactor in the presence of a first catalyst;

b) discontinuing the feed of the first catalyst to the prepolymerization reactor;

c-1) introducing propylene and an aluminium alkyl into the prepolymerisation reactor, preferably as a flush, where the amount of aluminium alkyl is 100 to 300 g/ton, i.e. 100 to 300 g per 1000 kg, of propylene introduced in this step i.e propylene fed into the prepolymerisation reactor between steps b) and c-2);

c-2) subsequently introducing propylene, optionally comonomers, and a second catalyst into the prepolymerization reactor;

d) polymerising propylene and optionally comonomers in the multi stage polymerisation reactor system in the presence of the second catalyst;

wherein the first catalyst is a Ziegler-Natta catalyst and the second catalyst is a single site catalyst

and preferably wherein the amount of the aluminium alkyl fed in step c-2) is 0.5 to 10.0 g per ton of total propylene fed into the prepolymerisation reactor and the slurry polymerisation reactor in steps c-2) and d).

In this embodiment, it can also be considered that propylene and an aluminium alkyl are introduced into the prepolymerisation reactor where the amount of aluminium alkyl is 100 to 300 g/h based on the tons of propylene introduced per hour in this flush step c-1).

Most preferably, the invention provides a process for transitioning between two different catalysts during the production of polypropylene homo- or copolymers in a continuous multistage polymerisation reaction, the process comprising the steps of:

a) polymerising propylene and optionally comonomers in a multistage polymerisation reactor system comprising a prepolymerization reactor, a subsequent slurry reactor and thereafter a gas phase reactor in the presence of a first catalyst;

b) discontinuing the feed of the first catalyst to the prepolymerization reactor;

c-1) introducing propylene and an aluminium alkyl into the prepolymerisation reactor where the amount of aluminium alkyl is 100 to 300 g/ton i.e. 100 to 300 g per 1000 kg, of propylene introduced in this step;

c-2) adjusting the amount of aluminium alkyl fed such that there is 0.5 to 10.0 g aluminium alkyl per ton, i.e. 0.5 to 10.0 g per 1000 kg, of total propylene fed in the prepolymerisation reactor and the slurry reactor of steps c-3), and d);

c-3) subsequently introducing propylene, optionally comonomers, and a second catalyst into the prepolymerization reactor;

d) polymerising propylene and optionally comonomers in the multi stage polymerisation reactor system in the presence of the second catalyst;

wherein the first catalyst is a Ziegler-Natta catalyst and the second catalyst is a single site catalyst.

**Definitions**

The term "first polymer product" is used to define the target polypropylene produced during the ZN catalyzed polymerization, e.g. the first propylene homopolymer.

The term "second polymer product" is used to define the target polypropylene produced during the single site catalyzed polymerization, e.g. the second propylene homopolymer.

The process of the invention occurs in a multistage polymerisation reactor system comprising a prepolymerisation reactor, at least one slurry reactor and at least one gas phase reactor. The ZN catalysed process will involve therefore the first prepolymerisation reaction, the first slurry polymerisation reaction and the first gas phase polymerisation reaction. These take place in the multistage polymerisation reactor system, i.e in the prepolymerisation reactor, the at least one slurry reactor and the at least one gas phase reactor, respectively.

The single site catalysed process will involve therefore the second prepolymerisation reaction, the second slurry polymerisation reaction and the second gas phase polymerisation reaction. These polymerisation reactions take place in the same multi stage polymerisation reactor system i.e. in the prepolymerisation reactor, the at least one slurry reactor and the at least one gas phase reactor, respectively.

It will be appreciated that the first and second polymerisations reactions actually take place within the same vessels.

The term "aluminium alkyl" defines a compound comprising Al bound to three alkyl groups. No halide groups are present in the aluminium alkyl compound.

## Detailed Description of Invention

The present invention concerns a process for transitioning between ZN and single site catalysts in a continuous multistage reaction, in particular in a multistage polymerisation process where there is a multistage polymerisation reactor system comprising a prepolymerisation reactor, a slurry reactor and a gas phase reactor.

Initially therefore it is envisaged that the multistage polymerisation reactor system will carry a propylene polymerisation reaction catalysed by a ZN catalyst (the first polymerisation). After transition, the multistage polymerisation reactor system will carry a propylene polymerisation reaction catalysed by a single site catalyst, especially a metallocene (the second polymerisation). The invention explains how to ensure a smooth transition between the two processes.

The nature of the two catalysts will be initially described followed by a description of the polymerisation process before and after transition as well as details of how the transition should be effected.

### Catalysts

### Ziegler-Natta (ZN) Catalyst

The Ziegler-Natta catalyst may be any Ziegler-Natta catalyst known in the art. A Ziegler-Natta type catalyst typically used in the present invention for propylene polymerization is stereospecific, solid high yield Ziegler-Natta catalyst component comprising compounds of Mg, Ti and Cl as well as an internal donor component. In addition to the solid catalyst component, a cocatalyst(s) and an external donor(s) are typically used in a propylene process.

Catalyst components may be supported on a particulate support, such as inorganic oxide, like silica or alumina, or magnesium halide may form the solid support. The solid catalyst component may also be prepared by an emulsion-solidification method or by precipitation method.

The solid catalyst component for propylene polymerization usually comprises an internal electron donor and an aluminium compound which acts as a cocatalyst. Suitable internal electron donors are, among others, esters of carboxylic acids or dicarboxylic acids, like phthalates, non-substituted or substituted malonates, non-substituted or substituted maleates, ethers and diethers or oxygen or nitrogen containing silicon compounds, or mixtures thereof.

The optional aluminium cocatalyst used in combination with the catalyst preparation is typically selected from aluminium alkyl, aluminium alkyl halide, aluminium alkyl alkoxide or aluminium alkyl halide alkoxide compounds, wherein the alkyl group contains 1 to 20 C-atom, preferably 1 to 10 C-atom, especially 1 to 6 carbon atoms.

The cocatalyst typically comprises an aluminium trialkyl or aluminium alkyl halide compound, wherein alkyl groups typically contain 1 to 20 C-atoms, e.g. 1 to 10 C-atoms. The aluminium alkyl compound is preferably trialkyl aluminium, such as trimethylaluminium, triethylaluminium (TEAL), tri-isobutylaluminium, tri-n-octylaluminium. Aluminium alkyl halides of interest include or dialkylaluminium halide, alkyl aluminium dihalide or alkyl aluminium sesquihalide, such as diethylaluminium chloride, dimethylaluminium chloride, ethylaluminium dichloride or ethylaluminium sesquichloride.

For catalyst activation, a cocatalyst is used in combination with the ZN catalyst. It is preferred if the cocatalyst is an aluminium alkyl compound. The use of TEAL is especially preferred.

It is also typical to use an external donor in the ZN polymerization process. Suitable external electron donors used in propylene polymerisation are well known in the art and include ethers, ketones, amines, alcohols, phenols, phosphines, esters and silanes. Silane type external donors are typically organosilane compounds containing Si-OCOR, Si-OR, or Si-$NR_2$ bonds, having silicon as the central atom, and R is an alkyl, alkenyl, aryl, arylalkyl or cycloalkyl with 1-20 carbon atoms are known in the art.

Preferred external donors are silane donors and include di-iso-propyldiethoxysilane (DIPDES), cyclohexylmethyl-diethoxysilane (CHMDES), dicyclopentyldimethoxysilane, cyclohexylmethyldimethoxysilane and dicyclopentadienyldiethoxysilane (DCPDES) and diethylaminotriethoxysilane.

The amount of external donor used may range from 2 to 70 wt ppm, preferably 5 to 50 wt ppm based on the weight of propylene feed to the first prepolymerisation reactor and first slurry reactor.

Examples of suitable catalysts and compounds in catalysts are shown among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

The Ziegler-Natta catalyst used is most preferably a solid Ziegler-Natta catalyst selected from a $MgCl_2$-supported titanium Ziegler Natta catalyst and a self-supported solid Ziegler Natta catalyst.

In general, the invention concerns a process for transitioning from a process catalyzed by a generic ZN catalyst to one catalyzed by a generic single site catalyst. The specific nature of the ZN catalyst is not critical although it is preferred if the ZN catalyzed process involves the use of an aluminium alkyl cocatalyst compound.

**Single Site Catalyst**

The single site catalyst is preferably a metallocene or non-metallocene catalyst. Single site catalysts preferably comprise a transition metal compound which contains at least one cyclopentadienyl, indenyl or fluorenyl ligand. Preferably the single site catalyst contains two cyclopentadienyl, indenyl or fluorenyl ligands, especially two bridged cyclopentadienyl, indenyl or fluorenyl ligands. Further, the ligands may have substituents, such as alkyl groups, aryl groups, arylalkyl groups, alkylaryl groups, silyl groups, siloxy groups, alkoxy groups or other heteroatom groups. Examples of suitable metallocene compounds are given, among others, in EP 629631, EP 629632, WO 00/26266, WO 02/002576, WO 02/002575, WO 99/12943, WO 98/40331, EP 776913, EP 1074557 and WO 99/42497, EP2402353, EP2729479 and EP2746289

The single site catalyst is ideally an organometallic compound (C) which comprises a transition metal (M) of Group 3 to 10 of the Periodic Table (IUPAC 2007) or of an actinide or lanthanide. The term "an organometallic compound (C)" in accordance with the present invention includes any metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (I):

$$(L)_mR_nMX_q \qquad (I)$$

wherein

"M" is a transition metal (M) transition metal (M) of Group 3 to 10 of the Periodic Table (IUPAC 2007);

each "X" is independently a monoanionic ligand, such as a σ-ligand;

each "L" is independently an organic ligand which coordinates to the transition metal "M";

"R" is a bridging group linking said organic ligands (L);

"m" is 1, 2 or 3, preferably 2;

"n" is 0, 1 or 2, preferably 1;

"q" is 1, 2 or 3, preferably 2; and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf).

In a more preferred definition, each organic ligand (L) is independently

(a) a substituted or unsubstituted cyclopentadienyl or a bi- or multicyclic derivative of a cyclopentadienyl which optionally bear further substituents and/or one or more hetero ring atoms from a Group 13 to 16 of the Periodic Table (IUPAC); or

(b) an acyclic $\eta^1$- to $\eta^4$- or $\eta^6$-ligand composed of atoms from Groups 13 to 16 of the Periodic Table, and in which the open chain ligand may be fused with one or two, preferably two, aromatic or non-aromatic rings and/or bear further substituents; or

(c) a cyclic $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems, such ring systems containing optionally one or more heteroatoms selected from Groups 15 and 16 of the Periodic Table.

Organometallic compounds (C), preferably used in the present invention, have at least one organic ligand (L) belonging to the group (a) above. Such organometallic compounds are called metallocenes.

More preferably at least one of the organic ligands (L), preferably both organic ligands (L), is (are) selected

from the group consisting of cyclopentadienyl, indenyl, tetrahydroindenyl, fluorenyl, which can be independently substituted or unsubstituted.

Further, in case the organic ligands (L) are substituted it is preferred that at least one organic ligand (L), preferably both organic ligands (L), comprise one or more substituents independently selected from $C_1$ to $C_{20}$ hydrocarbyl or silyl groups, which optionally contain one or more heteroatoms selected from groups 14 to 16 and/or are optionally substituted by halogen atom(s),

The term $C_1$ to $C_{20}$ hydrocarbyl group, whenever used in the present application, includes $C_1$ to $C_{20}$ alkyl, $C_2$ to $C_{20}$ alkenyl, $C_2$ to $C_{20}$ alkynyl, $C_3$ to $C_{20}$ cycloalkyl, $C_3$ to $C_{20}$ cycloalkenyl, $C_6$ to $C_{20}$ aryl, $C_7$ to $C_{20}$ alkylaryl or $C_7$ to $C_{20}$ arylalkyl groups or mixtures of these groups such as cycloalkyl substituted by alkyl.

Further, two substituents, which can be same or different, attached to adjacent C-atoms of a ring of the ligands (L) can also taken together form a further mono or multicyclic ring fused to the ring.

Preferred hydrocarbyl groups are independently selected from linear or branched $C_1$ to $C_{10}$ alkyl groups, optionally interrupted by one or more heteroatoms of groups 14 to 16, like O, N or S, and substituted or unsubstituted $C_6$ to $C_{20}$ aryl groups.

Linear or branched $C_1$ to $C_{10}$ alkyl groups, optionally interrupted by one or more heteroatoms of groups 14 to 16, are more preferably selected from methyl, ethyl, propyl, isopropyl, tertbutyl, isobutyl, $C_{5-6}$ cycloalkyl, OR, SR, where R is $C_1$ to $C_{10}$ alkyl group,

$C_6$ to $C_{20}$ aryl groups are more preferably phenyl groups, optionally substituted with 1 or 2 $C_1$ to $C_{10}$ alkyl groups as defined above.

By "σ-ligand" is meant throughout the invention a group bonded to the transition metal (M) via a sigma bond.

Further, the ligands "X" are preferably independently selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -Pr"$_3$, -SiR"$_3$, -OSiR"$_3$ and -NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl.

More preferably "X" ligands are selected from halogen, $C_1$ to $C_6$ alkyl, $C_5$ to $C_6$ cycloalkyl, $C_1$ to $C_6$ alkoxy, phenyl and benzyl groups.

The bridging group "R" may be a divalent bridge, preferably selected from - $R'_2C$-, -$R'_2C$-$CR'_2$-, -$R'_2Si$-, -$R'_2Si$-Si $R'_2$-, -$R'_2Ge$-, wherein each R' is independently a hydrogen atom, $C_1$ to $C_{20}$ alkyl, $C_2$ to $C_{10}$ cycloalkyl, tri($C_1$-$C_{20}$-alkyl)silyl, $C_6$- $C_{20}$-aryl, $C_7$- $C_{20}$ arylalkyl and $C_7$- $C_{20}$-alkylaryl .

More preferably the bridging group "R" is a divalent bridge selected from - $R'_2C$-, -$R'_2Si$-, wherein each R' is independently a hydrogen atom, $C_1$ to $C_{20}$ alkyl, $C_2$ to $C_{10}$ cycloalkyl, $C_6$- $C_{20}$-aryl, $C_7$- $C_{20}$ arylalkyl and $C_7$- $C_{20}$-alkylaryl .

Another subgroup of the organometallic compounds (C) of formula (I) is known as non-metallocenes wherein the transition metal (M), preferably a Group 4 to 6 transition metal, suitably Ti, Zr or Hf, has a coordination ligand other than a cyclopentadienyl ligand.

The term "non-metallocene" used herein means compounds, which bear no cyclopentadienyl ligands or fused derivatives thereof, but one or more non-cyclopentadienyl η-, or σ-, mono-, bi- or multidentate ligand. Such ligands can be chosen e.g. from the groups (b) and (c) as defined above and described e.g. in WO 01/70395, WO 97/10248, WO 99/41290, and WO 99/10353), and further in V. C. Gibson et al., in Angew. Chem. Int. Ed., engl., vol 38, 1999, pp 428 447, the disclosures of which are incorporated herein by reference.

However, the organometallic compound (C) of the present invention is preferably a metallocene as defined above.

Metallocenes are described in numerous patents. In the following just a few examples are listed; EP 260 130, WO 97/28170, WO 98/46616, WO 98/49208, WO 98/040331, WO 99/12981, WO 99/19335, WO 98/56831, WO 00/34341, WO00/148034, EP 423 101, EP 537 130, WO2002/02576, WO2005/105863, WO 2006097497, WO2007/116034, WO2007/107448, WO2009/027075, WO2009/054832, WO 2012/001052, and EP 2532687, the disclosures of which are incorporated herein by reference. Further, metallocenes are described widely in academic and scientific articles.

In a preferred embodiment the organometallic compound (C) has the following formula (Ia):

$$(L)_2R_nMX_2 \qquad (Ia)$$

wherein

"M" is Zr or Hf;

each "X" is a σ-ligand;

each "L" is an optionally substituted cyclopentadienyl, indenyl or tetrahydroindenyl;

"R" is $SiMe_2$ bridging group linking said organic ligands (L);

"n" is 0 or 1, preferably 1.

The metallocene catalyst complexes of the invention are preferably asymmetrical. Asymmetrical means simply that the two ligands forming the metallocene are different, that is, each ligand bears a set of substituents that are chemically different.

The metallocene catalyst complexes of the invention are typically chiral, racemic bridged bisindenyl $C_1$-symmetric metallocenes in their anti-configuration. Although such complexes are formally $C_1$-symmetric, the complexes ideally retain a pseudo-$C_2$-symmetry since they maintain $C_2$-symmetry in close proximity of the metal center although not at the ligand periphery. By nature of their chemistry both anti and syn enantiomer pairs (in case of $C_1$-symmetric complexes) are formed during the synthesis of the complexes. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane, as shown in the scheme below.

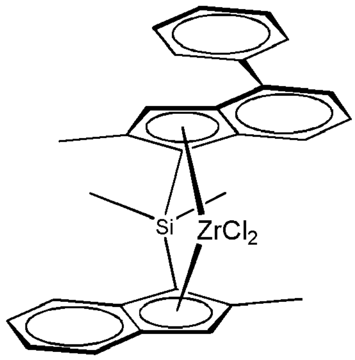

Racemic Anti

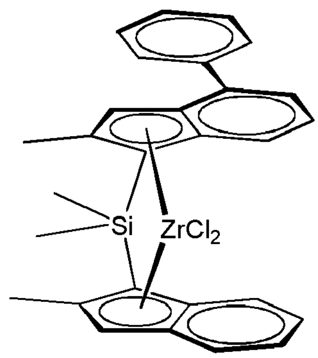

Racemic Syn

Formula (I), and any sub formulae, are intended to cover both syn- and anti-configurations. Preferred metallocene catalyst complexes are in the anti configuration.

The metallocene catalyst complexes of the invention are generally employed as the racemic-anti isomers. Ideally, therefore at least 95%mol, such as at least 98%mol, especially at least 99%mol of the metallocene catalyst complex is in the racemic-anti isomeric form.

More preferably, the single site catalyst is of formula (II)

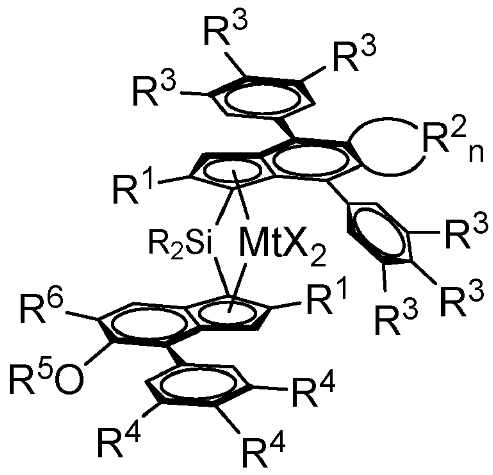

Formula (II)

Mt is Hf or Zr;

each X is a sigma-ligand;

each $R^1$ independently are the same or can be different and are a $CH_2$-$R^7$ group, with $R^7$ being H or linear or branched $C_1$-$_6$-alkyl group, $C_{3-8}$ cycloalkyl group, $C_{6-10}$ aryl group,

each $R^2$ is independently a -CH=- -CY=, -$CH_2$-, -CHY- or -$CY_2$- group, wherein Y is a $C_1$-$_{10}$ hydrocarbyl group and where n is 2-6,

each $R^3$ and $R^4$ are independently the same or can be different and are hydrogen, a linear or branched $C_1$-$C_6$-alkyl group, an OY group or a $C_7$-$_{20}$ arylalkyl, $C_7$-$_{20}$ alkylaryl group or $C_6$-$_{20}$ aryl group, whereby at least one $R^3$ per phenyl group and at least one $R^4$ is not hydrogen, and optionally two adjacent $R^3$ or $R^4$ groups can be part of a ring including the phenyl carbons to which they are bonded,

$R^5$ is a linear or branched $C_1$-$C_6$-alkyl group, $C_7$-$_{20}$ arylalkyl, $C_7$-$_{20}$ alkylaryl group or $C_6$-$C_{20}$-aryl group,

$R^6$ is a $C(R^8)_3$ group, with $R^8$ being a linear or branched $C_1$-$C_6$ alkyl group, and

each R is independently a $C_1$-$C_{20}$-hydrocarbyl.

It is preferred if Mt is Zr.

Preferably, each X is independently a hydrogen atom, a halogen atom, $C_{1-6}$ alkoxy group or an R' group, where R' is a $C_{1-6}$ alkyl, phenyl or benzyl group. Most preferably, X is chlorine, benzyl or a methyl group. Preferably, both X groups are the same. The most preferred options are two chlorides, two methyl or two benzyl groups, especially two chlorides.

Each R is independently a $C_1$-$C_{20}$-hydrocarbyl, such as $C_6$-$C_{20}$-aryl, $C_7$-$C_{20}$-arylalkyl or $C_7$-$C_{20}$-alkylaryl. The term $C_{1-20}$ hydrocarbyl group also includes $C_{1-20}$ alkyl, $C_{2-20}$ alkenyl, $C_{2-20}$ alkynyl, $C_{3-20}$ cycloalkyl, $C_{3-20}$ cycloalkenyl, $C_{6-20}$ aryl groups, $C_{7-20}$ alkylaryl groups or $C_{7-20}$ arylalkyl groups or mixtures of these groups such as cycloalkyl substituted by alkyl. Unless otherwise stated, preferred $C_{1-20}$ hydrocarbyl groups are $C_{1-20}$ alkyl, $C_{4-20}$ cycloalkyl, $C_{5-20}$ cycloalkyl-alkyl groups, $C_{7-20}$ alkylaryl groups, $C_{7-20}$ arylalkyl groups or $C_{6-20}$ aryl groups.

Preferably, both R groups are the same. It is preferred if R is a $C_1$-$C_{10}$-hydrocarbyl or $C_6$-$C_{10}$-aryl group, such as methyl, ethyl, propyl, isopropyl, tertbutyl, isobutyl, $C_{5-6}$-cycloalkyl, cyclohexylmethyl, phenyl or benzyl, more preferably both R are a $C_1$-$C_6$-alkyl, $C_{3-8}$ cycloalkyl or $C_6$-aryl group, such as a $C_1$-$C_4$-alkyl, C5-6 cycloalkyl or $C_6$-aryl group and most preferably both R are methyl or one is methyl and another cyclohexyl. Most preferably the bridge is -$Si(CH_3)_2$-.

Each $R^1$ independently are the same or can be different and are a $CH_2$-$R^7$ group, with $R^7$ being H or linear or branched $C_1$-$_6$-alkyl group, like methyl, ethyl, n-propyl, i-propyl, n-butyl, i-butyl, sec-butyl and tert.-butyl or $C_{3-8}$ cycloalkyl group (e.g. cyclohexyl) , $C_{6-10}$ aryl group (preferably phenyl).

Preferably, both $R^1$ groups are the same and are a $CH_2$-$R^7$ group, with $R^7$ being H or linear or branched $C_1$-$C_4$-alkyl group, more preferably, both $R^1$ groups are the same and are a $CH_2$-$R^7$ group, with $R^7$ being H or linear or branched $C_1$-$C_3$-alkyl group. Most preferably, both $R^1$ are both methyl.

Each $R^2$ is independently a -CH=- -CY=, -$CH_2$-, -CHY- or -$CY_2$- group, wherein Y is a $C_1$-$_{10}$ hydrocarbyl group, preferably a $C_1$-$_4$ hydrocarbyl group and where n is 2-6, preferably 3-4.

Each substituent $R^3$ and $R^4$ are independently the same or can be different and are hydrogen, a linear or branched $C_1$-$C_6$-alkyl group, an OY group or a $C_7$-$_{20}$ arylalkyl, $C_7$-$_{20}$ alkylaryl group or $C_6$-$_{20}$ aryl group, preferably hydrogen, a linear or branched $C_1$-$C_6$-alkyl group or $C_{6-20}$ aryl groups, and optionally two adjacent $R^3$ or $R^4$ groups can be part of a ring including the phenyl carbons to which they are bonded. More preferably, $R^3$ and $R^4$ are hydrogen or a linear or branched $C_1$-$C_4$ alkyl group or a OY-group, wherein Y is a is a $C_1$-$_4$ hydrocarbyl group. Even more preferably, each $R^3$ and $R^4$ are independently hydrogen, methyl, ethyl, isopropyl, tert-butyl or methoxy, especially hydrogen, methyl or tert-butyl, whereby at least one $R^3$ per phenyl group and at least one $R^4$ is not hydrogen.

Thus, preferably one or two $R^3$ per phenyl group are not hydrogen, more preferably on both phenyl groups the $R^3$ groups are the same, like 3',5'-di-methyl or 4'- tert-butyl for both phenyl groups.

For the indenyl moiety preferably one or two $R^4$ on the phenyl group are not hydrogen, more preferably two $R^4$ are not hydrogen and most preferably these two $R^4$ are the same like 3',5'-di-methyl or 3',5'-di-tert-butyl.

$R^5$ is a linear or branched $C_1$-$C_6$-alkyl group such as methyl, ethyl, n-propyl, i-propyl, n-butyl, i-butyl, sec-butyl and tert-butyl, $C_7$-$_{20}$ arylalkyl, $C_7$-$_{20}$ alkylaryl group or $C_6$-$C_{20}$ aryl group. $R^5$ is a preferably a linear or branched $C_1$-$C_6$ alkyl group or $C_{6-20}$ aryl group, more preferably a linear $C_1$-$C_4$ alkyl group, even more preferably a $C_1$-$C_2$ alkyl group and most preferably methyl.

$R^6$ is a $C(R^8)_3$ group, with $R^8$ being a linear or branched $C_1$-$C_6$ alkyl group.

Each R is independently a $C_1$-$C_{20}$-hydrocarbyl, $C_6$-$C_{20}$-aryl, $C_7$-$C_{20}$-arylalkyl or $C_7$-$C_{20}$-alkylaryl. Preferably each $R^8$ are the same or different with $R^8$ being a linear or branched $C_1$-$C_4$-alkyl group, more preferably with $R^8$ being the same and being a $C_1$-$C_2$-alkyl group. Most preferably, all $R^8$ groups are methyl.

In a further preferred embodiment the organometallic compound (C) has the following formula (III):

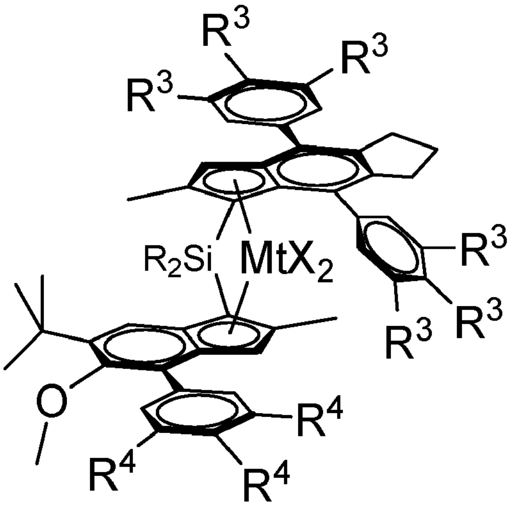

Formula (III)

wherein

Mt is Zr or Hf, preferably Zr;

each $R^3$ and $R^4$ are independently the same or can be different and are hydrogen or a linear or branched $C_1$-$C_6$-alkyl group, whereby at least on $R^3$ per phenyl group and at least one $R^4$ is not hydrogen.

Specific metallocene catalyst complexes include: rac-anti-dimethylsilanediyl[2-methyl-4,8-bis-(4'-tert-butylphenyl)-1 ,5,6,7-tetrahydro-s-indacen- 1 -yl][2-methyl-4-(3',5'-dimethyl-phenyl)-5-methoxy-6-tert-butylinden-1 - yl] zirconium dichloride;

rac-anti-dimethylsilanediyl[2-methyl-4,8-bis-(3',5'-dimethylphenyl)-1 ,5,6,7-tetrahydro-s- indacen-1-yl] [2-methyl-4-(3',5'-dimethylphenyl)-5-methoxy-6-tert-butylinden-1 -yl] zirconium dichloride;

rac-anti-dimethylsilanediyl[2-methyl-4,8-bis-(3',5'-dimethylphenyl)-1 ,5,6,7-tetrahydro-s-indacen-1-yl][2-methyl-4-(3',5'-ditert-butyl-phenyl)-5-methoxy-6-tert-butylinden-1-yl] zirconium dichloride or their corresponding zirconium dimethyl analogues.

| | | |
|---|---|---|
| 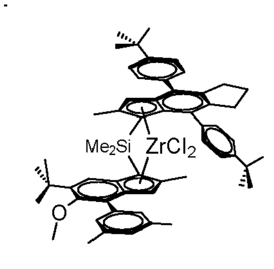 | 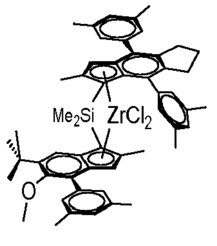 | 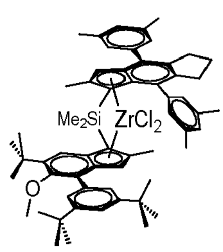 |
| MC-1 | MC-2 | MC-3 |

**Synthesis**

The ligands required to form the single site catalysts of the invention can be synthesised by any process and the skilled organic chemist would be able to devise various synthetic protocols for the manufacture of the necessary ligand materials. WO2007/116034, for example, discloses the necessary chemistry. Synthetic protocols can also generally be found in WO2002/02576, WO2011/135004, WO2012/084961, WO2012/001052, WO2011/076780 and WO2015/158790.

To form an active single site catalytic species it is normally necessary to employ a cocatalyst as is well known in the art. According to the present invention a cocatalyst system comprising a boron containing cocatalyst and/or an aluminoxane cocatalyst may be used.

The aluminoxane cocatalyst can be one of formula (X):

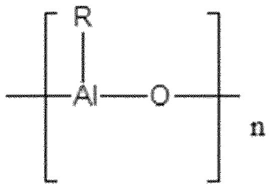

(X)

where n is usually from 6 to 20 and R has the meaning below.

Aluminoxanes are formed on partial hydrolysis of organoaluminum compounds, for example those of the formula $AlR_3$, AlRzY and $Al_2R_3Y_3$ where R can be, for example, $C_1$-$C_{10}$ alkyl, preferably $C_1$-$C_5$ alkyl, or $C_{3-10}$ cycloalkyl, $C_7$-$C_{12}$ arylalkyl or alkylaryl and/or phenyl or naphthyl, and where Y can be hydrogen, halogen, preferably chlorine or bromine, or C1-C10 alkoxy, preferably methoxy or ethoxy. The resulting oxygen-containing aluminoxanes are not in general pure compounds but mixtures of oligomers of the formula (X).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

It will be appreciated by the skilled person that where boron based cocatalysts are employed, it is normal to pre-alkylate the complex by reaction thereof with an aluminium alkyl compound, such as TIBA. This procedure is well known and any suitable aluminium alkyl, e.g. $Al(C_{1-6}\text{-alkyl})_3$. can be used.

Preferred aluminium alkyl compounds are triethylaluminium, tri-isobutylaluminium, tri-isohexylaluminium, tri-n-octylaluminium and tri-isooctylaluminium.

Alternatively, when a borate cocatalyst is used, the metallocene catalyst complex is in its alkylated version, that is for example a dimethyl or dibenzyl metallocene catalyst complex can be used.

Boron based cocatalysts of interest include those of formula (Z)

$$BY_3 \qquad (Z)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl.

Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(pentafluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include:

triethylammoniumtetra(phenyl)borate,

tributylammoniumtetra(phenyl)borate,

trimethylammoniumtetra(tolyl)borate,

tributylammoniumtetra(tolyl)borate,

tributylammoniumtetra(pentafluorophenyl)borate, tripropylammoniumtetra(dimethylphenyl)borate, tributylammoniumtetra(trifluoromethylphenyl)borate,

tributylammoniumtetra(4-fluorophenyl)borate,

N,N-dimethylcyclohexylammoniumtetrakis(pentafluorophenyl)borate,

N,N-dimethylbenzylammoniumtetrakis(pentafluorophenyl)borate,

N,N-dimethylaniliniumtetra(phenyl)borate,

N,N-diethylaniliniumtetra(phenyl)borate,

N,N-dimethylaniliniumtetrakis(pentafluorophenyl)borate,

N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate,

triethylphosphoniumtetrakis(phenyl)borate,

diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate,

or ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate or

N,N- dimethylbenzylammoniumtetrakis(pentafluorophenyl)borate.

It has been surprisingly found that certain boron cocatalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred cocatalysts are alumoxanes, more preferably methylalumoxanes, combinations of alumoxanes with Al-alkyls, boron or borate cocatalysts and combination of alumoxanes with boron-based cocatalysts.

According to the most preferred embodiment of present invention, the preferred cocatalysts are alumoxanes, most preferably methylalumoxanes.

Suitable amounts of cocatalyst will be well known to the skilled person. The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

**Catalyst Manufacture**

The single site (preferably metallocene) catalyst complex can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support such a catalyst.

Especially preferably the support is a porous material so that the complex may be loaded into the pores of the support, e.g. using a process analogous to those described in WO94/14856, WO95/12622 and WO2006/097497. The particle size is not critical but is preferably in the range 5 to 200 μm, more preferably 20 to 80 μm. The use of these supports is routine in the art.

In an alternative embodiment, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium.

In one embodiment, no external carrier is used but the catalyst is still presented in solid particulate form. Thus, no external support material, such as inert organic or inorganic carrier, for example silica as described above is employed.

In order to provide the catalyst of the invention in solid form but without using an external carrier, it is preferred if a liquid/liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in a solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles.

This process enables the manufacture of active catalyst particles with improved morphology, e.g. with a predetermined spherical shape, surface properties and particle size and without using any added external porous support material, such as an inorganic oxide, e.g. silica. By the term "preparing a solution of one or more catalyst components" is meant that the catalyst forming compounds may be combined in one solution, which is dispersed to the immiscible solvent, or, alternatively, at least two separate catalyst solutions for each part of the catalyst forming compounds may be prepared, which are then dispersed successively to the solvent. Full disclosure of the necessary process can be found in WO03/051934.

It is required that the single site polymerization process is effected in the presence of an aluminium alkyl scavenging agent such as an trialkylaluminum compound (TEAL, TMA and/or TIBAL).

As noted above, the key to the invention is not the specific nature of the single site catalyst used and hence this may be chosen broadly however it is required that the second prepolymerisation process can be effected in the presence of the aluminium alkyl compound. The key to the invention is how the transitioning process is carried out.

**Polymerisation Process**

The process according to the invention is a "flying" transition where the change from one type of produced polymer (the first polymer product herein) to another (the second polymer product) is continuous, that is without shutting down the reactors. When transitioning from a first to a second catalyst, the feed of the first catalyst is discontinued. Thereafter the second catalyst is introduced. In order to produce the second polymer product, it will be appreciated that the reactor conditions must be adapted relative to those used to produce the first polymer product. The change in the conditions can be effected before or after the second catalyst is introduced. Alternatively, some conditions might be changed before and others after the second catalyst is introduced.

The transition process of the invention occurs between two multistage polymerisation processes in particular in a multi stage polymerisation reactor system where a prepolymerization reactor and at least two further reactors are present. The reactors are connected in series. It is required therefore that there is a prepolymerisation reactor and at least one slurry reactor and at least one gas phase reactor. The slurry reactor is typically a loop reactor.

A preferred "loop-gas phase" polymerisation process has been developed by Borealis and is known as BORSTAR® technology and is widely described in the patent literature, such as in EP 0887 379, in WO92/12182 or in WO 2005/002744.

A change from production of one grade of polymer to another typically requires a transition period for a polymerization reactor to switch over to a new resin specification. Time is required to adjust the process conditions, such as reaction temperature, reactants and reactant concentration ratios etc., to allow the formation of the target new polymer. During a transition from a first multistage polymerization reaction intended to produce a first resin product meeting a first specification and a second multistage polymerization reaction intended to produce a second target resin product meeting a second specification, it will be clear that some "off-grade" polymer may be produced as the transition process occurs.

Unless the transition is implemented appropriately, such off-grade product may become sticky under the conditions (including temperature) present during the transition, and agglomeration or sheeting (on the reactor wall or dome) as well as product discharge problems can result. The formation of sticky polymer might force reactor shut down for cleaning. The process of the invention minimises this risk.

It will also be clear that the longer the transition, the more "off-grade" polymer may be produced and there is a commercial incentive to convert from a first to second polymer product as cleanly and quickly as possible.

The specific first and second polymerisation conditions depend on various factors such as the catalyst activity, type and amount of optional comonomer, type of polymer to be produced, and the production equipment. Consequently, the specific conditions during transition between Ziegler-Natta and single site catalysts have to be determined for each specific product in a particular plant. This is within the skills of the person skilled in the art.

The transitioning process of the invention occurs within a multistage polymerisation process involving a multi stage polymerisation reactor system comprising a prepolymerization reactor and a subsequent slurry reactor and involves the production of polypropylene homo- or polypropylene copolymers. A suitable plant for the continuous production of polypropylene homo- or copolymers therefore comprises feed systems to supply catalysts, monomers, comonomers, additives etc to the reactors, i.e. a prepolymerization reactor, a slurry phase reactor and a gas phase reactor such as a fluidized bed gas phase reactor (GPR).

In a first embodiment, the invention relies on the use of an aluminium alkyl scavenger in the second prepolymerisation which reduces the concentration of catalyst killers (poisons) in the the prepolymerisation reactor and the subsequent reactors by scavenging the catalyst killers. The aluminium alkyl may react with catalyst killers to produce compounds that may be easily purged or removed from the reactors.

An aluminium alkyl of the invention is of formula $Al(C1\text{-}10\text{-}alkyl)_3$ such as $Al(C1\text{-}6\text{-}alkyl)_3$. Each alkyl may be the same or different preferably the same. Mixtures may also be used.

Preferred aluminium alkyls include triethylaluminum (TEAL), trimethylaluminum (TMA), tri-isobutylaluminum (TIBAL) and tri-n-hexylaluminum (TNHAL).

The use of triethyl-aluminium (TEAL), tri-isobutyl-aluminium (TIBA) or a mixture thereof is especially preferred.

The method for a transition from the Ziegler-Natta catalyzed polymerization to metallocene catalyzed polymerization according to the invention may include the following steps.

Within step a) of the present process, a first prepolymerization is conducted. Preferably this is conducted as bulk slurry polymerization, e.g. in a continuous stirred tank reactor (CSTR) or loop reactor, in liquid propylene, i.e. the liquid phase mainly comprises propylene, with minor amount of other reactants and optionally inert components dissolved therein.

The first prepolymerization reaction is typically conducted at a temperature of 0 to 50°C, preferably from 10 to 45°C, and more preferably from 15 to 40°C. The pressure in the first prepolymerization reactor is not critical but must be sufficiently high to maintain the reaction mixture in liquid phase. Thus, the pressure may be from 20 to 100 bar, for example 30 to 70 bar.

The residence time will generally be in the range of 0.1 to 1 hour.

The ZN catalyst components are preferably all introduced to the first prepolymerization step. However, where the Ziegler-Natta catalyst, preferably a solid Ziegler-Natta catalyst, and the separate cocatalyst can be fed separately it is possible that only a part of the cocatalyst is introduced into the first prepolymerization stage and the remaining part into subsequent polymerization stages. Also in such cases it is necessary to introduce enough separate cocatalyst (where needed) into the prepolymerization stage that a sufficient polymerization reaction is obtained therein.

It is possible to add other components also to the first prepolymerization stage. Thus, hydrogen may be added into the first prepolymerization stage to control the molecular weight of the prepolymer as is known in the art. Further, antistatic additive may be used to prevent the catalyst or polymer particles from adhering to each other or to the walls of the reactor.

The precise control of the first prepolymerization conditions and reaction parameters is within the skills of artisan.

The thus obtained prepolymerized first catalyst is then fed to the subsequent slurry reactor such as a continuous stirred tank reactor, preferably to a loop reactor within step a) of the present process. For the slurry phase reactors the reaction temperature will generally be in the range of 50 to 110 °C (e.g. 60-100, or 70 to 110 °C), the reactor pressure will generally be in the range of 20 to 80 bar (e.g. 30-70 bar).

The residence time will generally be in the range of 0.2 to 5 hours (e.g. 0.3 to 2 hours) in the slurry reactor. Preferably the residence time is in the range of 0.2 to 1 hour, more preferably in the range of 0.3 to 0.6 hours. As it is well known in the art the average residence time $\tau$ can be calculated from Equation 1 below:

Equation 1: Residence time

$$\tau = \frac{V_R}{Q_o}$$

where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The diluent used will generally be an aliphatic hydrocarbon having a boiling point in the range -70 to +100 °C. In such reactors, polymerization may if desired be effected under supercritical conditions.

The polymer produced in the slurry phase reactor is then fed into the gas phase reactor within step a) of the present process. The slurry may be withdrawn from the reactor either continuously or intermittently. A preferred way of intermittent withdrawal is the use of settling legs where slurry is allowed to concentrate before withdrawing a batch of

the concentrated slurry from the reactor.

For gas phase reactors, the reaction temperature used will generally be in the range of 50 to 130 °C (e.g. 60 to 115 °C, or 60 to 100 °C), the reactor pressure will generally be in the range of 5 to 60 bar, preferably 10 to 40 bar and the residence time will generally be 1 to 8 hours. The gas used will commonly be a non-reactive gas such as nitrogen together with monomer.

Hydrogen may be introduced into any reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

In the process of the invention, the Ziegler-Natta catalyzed polymerization is preferably started as is known in the state of the art by introducing the Ziegler-Natta catalyst, as described above, via a catalyst feed tank, preferably via an oil catalyst feed system or via a wax catalyst feed system to the prepolymerization reactor. Furthermore propylene and hydrogen and optionally the cocatalyst and the external donor (whole amount or only part therefrom) are added to the prepolymerization reactor.

Then the prepolymerized catalyst, additional propylene, hydrogen, optionally additional cocatalyst and external donor are introduced into the slurry phase reactor, afterwards recovering the polymerization product from the slurry phase reactor and conducting it to a gas phase reactor fluid bed, optionally feeding additional propylene and optional comonomer to the gas phase reactor, optionally feeding additional hydrogen to the gas phase reactor to control the hydrogen-to-propylene ratio to provide the desired molecular mass of the polymerization product, recovering the polymerization product from the gas phase reactor.

The reaction conditions in the slurry phase and the gas phase reactor (like temperature, pressure, amount of propylene and optional comonomers, amount of hydrogen) are chosen according to the desired product parameters of the first product. In general, such a process is conventional.

**Transition**

During the Ziegler-Natta catalyzed polymerization of step a) of the present process, a single site catalyst, e.g. as described above, may be introduced into a catalyst feed tank that connects to the prepolymerisation reactor. Typically, the catalyst is prepared about 130 to 400 mins before its desired introduction into the prepolymerization reactor.

It is possible that before introducing the single site catalyst into the prepolymerization reactor, the reaction conditions in the prepolymerisation and slurry reactors are adapted to reflect those required to produce the second polymer product. Thus, the hydrogen concentration in the prepolymerisation reactor and the slurry reactors may be adjusted. The temperature within the prepolymerisation reactor and the slurry reactors may be adjusted and so on. Such adjustments within the prepolymerisation and slurry reactors may occur about 15 to 100 mins before the single site catalyst is introduced into the slurry reactor. It is preferred if the hydrogen feed into the prepolymerisation and slurry reactors is adjusted to reflect that required to produce the second polymer product before the introduction of the single site catalyst.

It is preferred if adjustments to any other polymerisation conditions required to target the second polymer product (e.g. monomer content, temperature) occurs after introduction of the single site catalyst to the prepolymerisation reactor in step c).

Where adjustments in conditions are needed in both prepolymerisation and slurry reactors, the order of adjustment does not matter. It may be that the prepolymerisation conditions are adjusted first or the slurry reactor conditions are adjusted first or that adjustment occurs simultaneously.

It is preferred if antistatic agents are introduced into the prepolymerisation reactor before the second catalyst is introduced. This may occur 30 to 120 mins before the single site catalyst is introduced.

Shortly before the single site catalyst is to be introduced into the prepolymerisation reactor, the feed of external electron donor in the ZN catalysed process is preferably discontinued. Ideally this occurs 5 to 30 mins before the single site catalyst is introduced. It is also required that the ZN catalyst feed itself is discontinued at around this time, e.g. 5 to 30 mins before single site catalyst introduction (step b).

Conveniently, the feed of the ZN catalyst is discontinued at the same time as the external electron donor feed is discontinued.

The ZN catalyst includes a cocatalyst. That cocatalyst may be an aluminium alkyl cocatalyst. Alternatively, a different cocatalyst may have been used in the ZN polymerisation. Where no aluminium alkyl cocatalyst was used and a different cocatalyst was used, the feed of the different cocatalyst may be discontinued, preferably at the same time as

the ZN catalyst feed is discontinued, e.g. 5 to 30 mins before the single site catalyst is introduced.

If the cocatalyst used with the ZN catalyst was an aluminium alkyl, rather than completely stop this feed, it can be adjusted as explained below.

It is preferred if the ZN catalyst includes an aluminium alkyl cocatalyst and hence to fulfil the requirements of the invention, the amount of aluminium alkyl has to be adjusted, typically lowered. It is likely that the feed of an aluminium alkyl cocatalyst to the ZN catalysed polymerisation occurs at a much higher concentration than will be desired during the single site catalyst polymerisation step and hence it is likely that the aluminium alkyl concentration will need to be reduced if it is being used as a cocatalyst in the ZN polymerisation process.

It is preferred that the total amount of aluminium alkyl fed to the prepolymerisation reactor and slurry reactor of step a) is at least 20 g of aluminium alkyl (such as TEAL) per ton, i.e. at least 20 g per 1000 kg, of total propylene added to the prepolymerisation reactor and the slurry reactor of step a), preferably 150 to 200 g of aluminium alkyl per ton, i.e. 150 to 200 g per 1000 kg, of total propylene.

The target is to adjust the aluminium alkyl feed or start an aluminium alkyl feed such that the amount of aluminium alkyl fed to the prepolymerisation reactor is 0.5 to 10.0 g per ton, i.e. 0.5 to 10.0 g per 1000 kg, of total propylene fed into the prepolymerisation reactor and the slurry reactor during the second polymerisation. Note that if a mixture of aluminium alkyl compounds is used then this figure refers to the total content of all aluminium alkyls used.

This level of aluminium alkyl is typically started 5 to 30 mins before the single site catalyst is introduced into the prepolymerisation reactor, i.e. the target aluminium alkyl concentration is preferably established before the single site catalyst is introduced. The reduced aluminium alkyl concentration can however be started at the same time as the single site catalyst is introduced. If the supply of aluminium alkyl was established before the single site catalyst is introduced, supply of aluminium alkyl should still be sustained as the single site catalyst is introduced.

Preferably the amount of aluminium alkyl fed is 0.5 to 5.0 g per ton i.e. 0.5 to 5.0 g per 1000 kg, such as 1.0 to 3.0 g per ton i.e. 1.0 to 3.0 g per 1000 kg, of total propylene fed to the prepolymerisation reactor and the slurry reactor in steps c) and d).

Alternatively viewed, the amount of aluminium alkyl fed is 0.5 to 5.0 g per hour, such as 1.0 to 3.0 g per hour, per ton, i.e. 1000 kg, of total propylene fed per hour to the prepolymerisation reactor and the slurry reactor in steps c) and d).

Thus, if the prepolymerisation and slurry reactors combined are fed 4000 kg of C3 per hour during the transition and the second polymerisation then the amount of aluminium alkyl fed into the prepolymerisation reactor would be in the range of 2 g to 40 g per hour.

The aluminium alkyl is preferably introduced into the prepolymerisation reactor via the catalyst feed line. Once therefore the catalyst feed begins, the catalyst and aluminium alkyl are fed together. The aluminium alkyl may be added via the upper or lower parts of that catalyst feed line.

It will be appreciated that all catalyst and aluminium alkyl is fed via the prepolymerisation reactor. In contrast propylene may be fed to the prepolymerisation reactor and directly to the slurry reactor and the gas phase reactor(s).

Then the single site catalyst is fed into the prepolymerization reactor. It is preferred that after introducing the single site catalyst into the prepolymerization reactor the reaction conditions in the prepolymerisation and slurry reactors are adapted to reflect those required to produce the second polymer product. Thus, the temperature/pressure/monomer feed/comonomer feed/hydrogen within the prepolymerisation and slurry reactors may be adjusted. Such adjustments within the prepolymerisation and slurry reactors may occur about 0 to 40 mins after the single site catalyst is introduced into the prepolymerisation reactor.

Where adjustments are needed in both prepolymerisation and slurry reactors, the order of adjustment does not matter. It may be that the prepolymerisation conditions are adjusted first or the slurry reactor conditions are adjusted first or that adjustment occurs simultaneously. Preferably however the prepolymerisation conditions are adjusted before the conditions in the slurry reactor are adjusted to reflect those required to produce the second polymer product.

The conditions in the second prepolymerization are similar to those above for the first prepolymerisation. Preferably this is conducted as bulk slurry polymerization, e.g. in a continuous stirred tank reactor (CSTR) or loop reactor, in liquid propylene, i.e. the liquid phase mainly comprises propylene, with minor amount of other reactants and optionally inert components dissolved therein.

The second prepolymerization reaction is typically conducted at a temperature of 0 to 50°C, preferably from 10 to 45°C, and more preferably from 15 to 40°C. The pressure in the prepolymerization reactor is not critical but must be sufficiently high to maintain the reaction mixture in liquid phase. Thus, the pressure may be from 20 to 100 bar, for example 30 to 70 bar.

The residence time will generally be in the range of 0.1 to 1 hour.

The thus obtained prepolymerized second catalyst is then fed to the slurry reactor, preferably to a loop reactor. For the slurry phase reactors the reaction temperature will generally be in the range of 50 to 110 °C (e.g. 60 to 100, or 70 to 110 °C). The reactor pressure will generally be in the range of 20 to 80 bar (e.g. 30 to 70 bar).

The residence time will generally be in the range of 0.2 to 5 hours (e.g. 0.3 to 2 hours) in the slurry reactor. Preferably the residence time is in the range of 0.2 to 1 hour, more preferably in the range of 0.3 to 0.6 hours.

The diluent used will generally be an aliphatic hydrocarbon having a boiling point in the range -70 to +100 °C. In such reactors, polymerization may if desired be effected under supercritical conditions.

About 20 to 120 mins after the introduction of the single site catalyst into the prepolymerisation reactor, the gas phase reactor conditions are adapted to the reflect the desired second product parameters. This preferably occurs after the conditions in the slurry reactor are adjusted.

The polymer produced in the slurry phase reactor is then fed into the gas phase reactor. For gas phase reactors, the reaction temperature used will generally be in the range of 50 to 130 °C (e.g. 60 to 115 °C, or 60 to 100 °C), the reactor pressure will generally be in the range of 5 to 60 bar, preferably 10 to 40 bar and the residence time will generally be 1 to 8 hours. Residence times range from 1 to 8 hrs.

The gas used will commonly be a non-reactive gas such as nitrogen together with monomer.

Hydrogen may be introduced into any reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

Monomer propylene and any comonomer can be introduced into any of the prepolymerisation, slurry or gas phase polymerisations. If a comonomer is present, it is preferred if this is added to the gas phase reactor only.

The amount of propylene fed to the prepolymerisation and slurry reactors is calculated from the time the single site catalyst is introduced into the prepolymerisation reactor.

It is preferred that the amount of the propylene fed to the prepolymerisation reactor and slurry reactor is calculated based on the amounts required to prepare the second polymer product, i.e. based on amounts required after any transitioning adjustments have occurred. For the purpose of determining the ratio of aluminium alkyl to propylene therefore, it can be assumed that the amount of C3 supplied to the prepolymerisation reactor and slurry reactor is calculated from the time the single site catalyst is supplied and assumes that the C3 amounts supplied from the time the single site catalyst is supplied are the target amounts required to prepare the second polymer product. Any transitioning adjustments can be ignored.

It is however preferred of the propylene levels in the prepolymerisation and slurry reactors do not change during the polymerisation in the presence of the single site catalyst. It is further noted that the supply of propylene to the polymerisation can be linked to the aluminium alkyl feed to ensure any fluctuations are accounted for.

For example, if the C3 feed to the slurry reactor required to produce the second polymer product is 1000 kg/h then it can be considered that this amount of C3 is supplied to the slurry reactor from the time when the single site catalyst is introduced into the prepolymerisation reactor.

The amount of aluminium alkyl fed to the prepolymerisation reactor can be counted from the instant the second catalyst is introduced. There may be small amounts of aluminium alkyl and propylene introduced into the prepolymerisation reactor before the second catalyst is added but these amounts are low and can be ignored.

It is preferred if the majority of the second polymer product derives from the slurry phase stage, e.g. splits may be 50 to 80 wt% slurry and 50 to 20 wt% gas phase. Any prepolymerisation step contribution is deemed part of the slurry phase step.

**Advantages**

By adjusting the aluminium alkyl feed to the prepolymerisation reactor such that there is 0.5 to 10.0 g of aluminium alkyl fed per ton of propylene fed in the second prepolymerisation and second slurry stage polymerisation combined, various benefits flow. The total productivity of the second polymer product was improved relative to processes where the aluminium alkyl was not used. The balance between reactors was better so reactor splits can be better controlled. There was reduced amorphous fraction (xylene soluble fraction) in the second polymer product relative processes where the aluminium alkyl was not used.

The average particle size (PSD) of the final polymer powder was narrower, i.e. more monodisperse, relative to a process where the aluminium alkyl was not used. In general, there were fewer large polymer particles.

The bulk density of the second polymer product was increased and the time to reach normal production was accelerated. The polymer product also had idea thermal properties.

The transition occurs smoothly with no process disturbances like plugging or fouling.

Without wishing to be limited by theory, it is envisaged that when aluminium alkyl is supplied in the concentrations defined herein, poisons from the first stage polymerisation such as the external donor and antistatic agent, water and oxygen react with the aluminium alkyl and are unable to harm the new single site catalyst which is notoriously sensitive

to poisons.

Once the second polymerisation process is established, i.e. when the second polymerisation process generates a second polymer product that is within the target ranges, the transition process is complete and the feed of aluminium alkyl can be discontinued if desired but there is also the option to continue the aluminium alkyl feed at a lower concentration to act as scavenger for any residual catalyst poisons.

**Aluminium alkyl Flush**

In an alternative embodiment, between stopping the supply of the ZN catalyst and starting the supply of the single site catalyst, propylene and an aluminium alkyl are introduced into the prepolymerisation reactor as a flush.

In this embodiment therefore, the ZN catalyst feed is discontinued. Thereafter, (e.g. 5 to 30 mins thereafter) aluminium alkyl and propylene are introduced into the prepolymerisation reactor as a flush. The amount of aluminium alkyl introduced is 100 to 300 g/ton, i.e. 100 to 300 g per 1000 kg, of propylene, such as 150 to 200 g per ton, i.e. 150 to 200 g per 1000 kg, of propylene in the flush i.e. propylene fed into the prepolymerisation reactor between steps b) and c).

The flush may last from 30 mins to 10 hrs, 0.5 to 4 hrs, such as 1 to 3 hrs.

It is preferred if the propylene/aluminium alkyl flush is introduced into the prepolymerisation reactor from the lower part of the catalyst feed line. Whilst the location of the aluminium alkyl feed into the catalyst feed line is not important, minimising the time when the aluminium alkyl stays in contact with the catalyst in the feed line may be useful and hence the preferred location of the feed is the end of the catalyst feed line.

Ideally the flush consists of the propylene and aluminium alkyl components and no other feed to the prepolymerisation reactor occurs during the flush.

Thereafter the single site catalyst can be introduced following protocols discussed above. In particular therefore, the amount of aluminium alkyl feed once the flush is complete can be adjusted to 0.5 to 10.0 g aluminium alkyl per ton, i.e. 1000 kg, of propylene fed in the second prepolymerisation and second slurry stage polymerisation combined. This target range may be established before the single site catalyst is introduced, e.g. 5 to 30 mins before or the single site catalyst might be introduced simultaneously with this aluminium alkyl adjustment.

The second polymerisation then continues following the protocols explained above.

**Flush Advantages**

The advantages associated with this flush process are similar to those above. The total productivity of the second polymer product was improved relative to processes where a flush and aluminium alkyl was not used and relative to a process of the first embodiment. There was reduced amorphous fraction (xylene soluble fraction) in the second polymer product relative processes where the flush and aluminium alkyl was not used.

The average particle size (PSD) of the final polymer powder was narrower, i.e. more monodisperse, relative to a process where the flush and aluminium alkyl were not used or relative to embodiment one.

The transition occurs smoothly with no process disturbances like plugging or fouling.

Without wishing to be limited by theory, it is envisaged that when aluminium alkyl is supplied in the concentrations defined herein or where the flush step is used, poisons from the first stage polymerisation such as the external donor and antistatic agent, water and oxygen react with the aluminium alkyl and are unable to harm the new single site catalyst which is notoriously sensitive to poisons.

Once the second polymerisation process is established, i.e. when the second polymerisation process generates a second polymer product that is within the target ranges, the transition process is complete and the feed of aluminium alkyl can be discontinued if desired but there is also the option to continue the aluminium alkyl feed at a lower concentration to act as scavenger for any residual catalyst poisons..

Advantageously the single site catalysts used according to the invention are not poison sensitive.

In a preferred embodiment no catalyst killer is needed, e.g. carbon monoxide. It is especially preferred therefore if the process of the invention does not involve the addition of a catalyst killer to stop the activity of the ZN catalyst.

The polypropylene produced before and after transition may be a homopolymer or a copolymer. The polypropylene produced before transition may be a homopolymer or a copolymer. Suitable comonomers are ethylene and C4-C10 alkylenes. Preferably ethylene is used if a comonomer is present. Furthermore the polypropylene produced may be unimodal or bimodal with respect to the molecular weight distribution. It is preferred if the first polymer product is a homopolymer.

The second polymer product may be a copolymer or homopolymer. Suitable comonomers are ethylene and C4-C10 alkylenes. Preferably ethylene is used if a comonomer is present. Preferably the polypropylene produced with the single site catalyst is a polypropylene homopolymer, e.g. one suitable for producing biaxially oriented films.

It is generally observed that the $MFR_2$ of the formed polypropylene (which might range from 0.5 to 50 g/10min) is higher when the processes of the invention are in place then when they are not. Adjustment therefore of the hydrogen

concentration may be required to account for this change of molecular weight.

**Poisons**

The main poisons to the second catalyst are the external donor used during the ZN catalysed process and any antistatic agent that is used in the polymerisation process to prevent particle agglomeration. Typical antistatic agents include glycerol monostearate (GMS), ethoxylated fatty acid amines, sorbitan monooleate and diethanolamides. Other poisons include $H_2O$ and $O_2$. As it is generally known that a single site catalyst is very sensitive to catalyst poisons (mainly due to the low amount of active metal in it and no external co-catalyst in the process) the invention solves the problem that these poisons cause through the use of an aluminium alkyl to scavenge them.

The invention is further described with reference to the following nonlimiting examples and figure.

Figure 1 shows a prepolymerisation reactor with stirrer and a feed line into the reactor. The fed line allows the catalyst, the flush or the aluminium alkyl to be introduced into the prepolymerisation reactor. The aluminium alkyl can be introduced into the catalyst feed line in its lower or upper section.

The aluminium alkyl and propylene flush can also be introduced into the prepolymerisation reactor via the catalyst feed line.

**Analytical tests**

The following definitions of terms and determination methods apply for the above general description of the invention as well as to the below examples unless otherwise defined.

$MFR_2$ (230 °C) is measured according to ISO 1133 (230 °C, 2.16 kg load).

Bulk Density: The bulk density of the polymer powder was determined according to ASTM D1895-96, method A.

**Particle size (PS) and Average Particle Size (APS)** were measured according to ISO 13322-2 using Image analysis methods using a Camsizer P4 analyser.

**Xylene solubles**

The xylene soluble fraction (XS) as defined and described in the present invention was determined as follows: 2.0 g of the polymer were dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \text{ x } m_1 \text{ X } v_0)/(m_0 \text{ x } v_1),$$

wherein $m_0$ designates the initial polymer amount (grams), m1 defines the weight of residue (grams), $v_0$ defines the initial volume (milliliter) and $v_1$ defines the volume of the analysed sample (milliliter).

**DSC analysis**

Melting temperature Tm and crystallization temperature Tcr was measured on approx. 5 mg samples with a Mettler-Toledo 822e differential scanning calorimeter (DSC), according to ISO11357-3 in a heat/cool/heat cycle with a scan rate of 10 °C/min in the temperature range of +23 to +225 °C under a nitrogen flow rate of 50 ml min-1. Melting temperature was taken as the endotherm peak, respectively in the second heating step. Calibration of the instrument was performed with H20, Lead, Tin, Indium, according to ISO 11357-1.

**Examples**

**Example 1**

Example 1 demonstrates the change from ZN to single site catalyst with a small TEAL feed as a scavenger.

- CE01 Reference example, No TEAL is added with 2nd catalyst feed
- IE 01 TEAL is fed to the lower part of the catalyst feed line

- IE 02: TEAL is fed to the upper part of the catalyst feed line

The following catalysts are used in the present invention

**Single-site catalyst**

The single-site catalyst used in the polymerization process for all examples was

*Anti*-dimethylsilanediyl[2-methyl-4,8-di(3,5-dimethylphenyl)-1,5,6,7-tetrahydro-*s*-indacen-1-yl][2-methyl-4-(3,5-dimethylphenyl)-5-methoxy-6-*tert*-butylinden-1-yl] zirconium dichloride as disclosed in WO2019/179959 A1 as MC-2.

The supported metallocene catalyst was produced analogously to IE2 in WO2019/179959 A1.

**Ziegler-Natta catalyst**

A Ziegler Natta catalyst used in the examples was produced as follows:

*Raw materials*

$TiCl_4$ (CAS 7550-45-90) was supplied by commercial source.

20 % solution in toluene of butyl ethyl magnesium (Mg(Bu)(Et)), provided by Crompton

2-ethylhexanol, provided by Merck Chemicals

3-Butoxy-2-propanol, provided by Sigma-Aldrich

bis(2-ethylhexyl)citraconate, provided by Contract Chemicals

Viscoplex® 1-254, provided by Evonik

Heptane, provided by Chevron

*Preparation of Mg complex*

3,4 litre of 2-ethylhexanol and 810 ml of propylene glycol butyl monoether ( in a molar ratio 4/1) were added to a 20 1 reactor. Then 7,8 litre of a 20 % solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

*Preparation of catalyst component*

19,5 ml titanium tetrachloride was placed in a 300 ml reactor equipped with a mechanical stirrer at 25°C. Mixing speed was adjusted to 170 rpm. 26,0 of Mg-complex prepared above was added within 30 minutes keeping the temperature at 25 °C . 3,0 ml of Viscoplex 1-254 and 24,0 ml of heptane were added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed with 100 ml of toluene, with of 30 ml of TiCl4, with 100 ml of toluene and two times with 60 ml of heptane. I ml of donor was added to the two first washings. Washings were made at 80 °C under stirring 30 min with 170 rpm. After stirring was stopped the reaction mixture was allowed to settle for 20-30 minutes and followed by siphoning.

Afterwards stirring was stopped and the reaction mixture was allowed to settle for 10 minutes decreasing the temperature to 70°C with subsequent siphoning, and followed by $N_2$ sparging for 20 minutes to yield an air sensitive

powder.

Catalyst has a surface area measured by BET method below 5 $m^2/g$, i.e. below the detection limit.

**Polymerisation Examples**

The examples were carried out in Pilot scale.

The first polymerization was operated for 24 hours in conventional manner in the presence of ZNPP catalyst as above with external donor at 30 to 50 g/t propylene supplied to the process.

The ZN catalyst comprises TEAL as an aluminium alkyl cocatalyst. This was supplied at 170 g/ton of propylene supplied to the prepolymerisation and first slurry reactor combined. The transition procedure was operated as follows. During the transition period both Single-site and Ziegler-Natta catalysed polymers were produced.

**General Transition Timing Protocol relative to Single Site catalyst addition at time zero**

- - 5,0 h Single site catalyst was readied in the catalyst feed tank
- - 1,0 h Antistatic feed was started into the prepolymerisation reactor (SPAN 80)
- - 0,5 h Hydrogen feed to the second polymerisation was adjusted to reflect that required for target second polymer product;
- - 0,1 h The external donor feed was stopped
- - 0,1 h The ZN catalyst feed was stopped;
- - 0,1 h The TEAL feed was changed from 170 g/ton of C3 to 2,5 g/ ton of C3 based on the amount of C3 feed to the prepolymerisation and slurry reactor combined
- 0 h Single site catalyst feed started
- + 0,1 h The second prepolymerisation conditions were adjusted to reflect those required for the second polymer product
- + 0,2 h The second slurry phase conditions were adjusted to reflect those required for the second polymer product
- + 0,3 h The second gas phase conditions were adjusted to reflect those required for the second polymer product
- + 0,5-2h GPR operation begins when loop production is over 25 from the maximum production.

Conditions within the polymerisation reactors are described in detail in table 1

Table 1

| **Example** | **CE01** | **IE01** | **IE02** |
|---|---|---|---|
| Experiment | Reference | TEAl to the lower part of cat feed line | TEAl to the lower part of cat feed line |
| Product type | h-PP | h-PP | h-PP |
| **Prepolymerisation reactor** | | | |
| Temp. (°C) | 20 | 20 | 20 |
| Press. (kPa) | 5391 | 5199 | 5227 |
| Catalyst feed (g/h) | 4.4 | 4.1 | 4.0 |
| Actual TEAL feed (g/h) | 0 | 0,63 | 0,58 |
| $H_2$ (g/h) | 0.2 | 0.2 | 0.2 |
| Feed $H_2$/C3 ratio (mol/kmol) | 0.1 | 0.0 | 0.0 |
| C3 feed (kg/h) | 65 | 65 | 65 |
| Residence time (h) | 0.3 | 0.3 | 0.3 |
| Production rate (kg/h) | 1.5 | 1.8 | 1.7 |
| **Loop reactor** | | | |
| Temp. (°C) | 75.0 | 75.0 | 75.0 |

(continued)

| | | | |
|---|---|---|---|
| **Loop reactor** | | | |
| Press. (kPa) | 5381 | 5274 | 5275 |
| C3 feed (kg/h) | 185 | 185 | 185 |
| Calculated $H_2$/C3 ratio (mol/kmol) | 0.1 | 0.2 | 0.2 |
| Feed $H_2$/C3 ratio (mol/kmol) | 0.1 | 0.1 | 0.1 |
| Production rate (kg/h) | 33.8 | 34.4 | 36.7 |
| Solid Concentration (wt.-%) | 21.2 | 21.6 | 24.1 |
| Polymer Split (wt.-%) | 81 | 56 | 59 |
| Polymer residence time (h) | 0.4 | 0.4 | 0.4 |
| $MFR_2$ (g/10 min) | 5.7 | 5.8 | 5.2 |
| TEAL to C3 (g TEAL/ton of C3) | - | 2.5 | 2.3 |
| **Gas Phase Reactor** | | | |
| Temp. (°C) | 80 | 80 | 80 |
| **Example** | **CE01** | **IE01** | **IE02** |
| Press. (kPa) | 2499 | 2500 | 2501 |
| $H_2$ feed (g/h) | 16 | 17 | 18 |
| $H_2$/C3 ratio (mol/kmol) | 2 | 2 | 2 |
| C2/C3 ratio (mol/kmol) | 0 | 0 | 0 |
| Polymer Split (wt.-%) | 20 | 44 | 41 |
| Residence time (h) | 4.5 | 2.6 | 2.5 |
| $MFR_2$ (g/10 min) | 6.3 | 10.9 | 6.52 |
| **Total reactors and final PP powder** | | | |
| Total Production rate from Silo (kg/h) | 42.0 | 60.9 | 62.0 |
| Total productivity (kg PP/g cat) | 9.7 | 14.9 | 15.6 |
| $MFR_2$ (g/10 min) | 6.57 | 12.7 | 8.72 |
| XS (wt-%) | 1.2 | 0.66 | 0.69 |
| Bulk Density (kg/$m^3$) | 390 | 442 | 424 |
| PS < 0,106 mm | 0.02 | 0.06 | 0.04 |
| PS > 0,106 mm | 0.19 | 0.26 | 0.16 |
| PS > 0,250 mm | 0.88 | 0.42 | 0.39 |
| PS > 0,355 mm | 66.3 | 67.62 | 54.03 |
| PS > 0,850 mm | 32 | 31.13 | 44.47 |
| PS > 2,0 mm | 0.57 | 0.41 | 0.84 |
| PS > 4,0 mm | 0.04 | 0.1 | 0.07 |
| APS (mm) | 0.877 | 0.869 | 0.989 |
| Tm (°C) | 155.3 | 154.2 | 157.5 |

(continued)

| Total reactors and final PP powder | | | |
|---|---|---|---|
| Tcr (°C) | 113.9 | 113.7 | 115.9 |

By using 2,5 wt-ppm TEAL as scavenger the following improvements were seen:

- Total productivity was better.
- Better reactor balance, i.e. better production split between reactors
- Less amorphous fraction, lower XS.
- Good average particle size and PSD of the final PP powder.
- Better bulk density of the final PP powder.
- Shorter time to reach normal production.

**Example 2**

In example 2 a TEAL flush was used between the ZN catalyst feed being stopped and the starting of the single site catalyst feed. The same catalysts as example 1 were used.

- CE 02: No TEAL flush

- IE 03: High amount TEAL flush for 2 hours, and then TEAL feed as per example 1

The first polymerization was operated for 24 hours in conventional manner in the presence of ZNPP catalyst as above with external donor at 30 to 50 g/t propylene supplied to the process.

The ZN catalyst comprises TEAL as an aluminium alkyl cocatalyst. This was supplied at 170 g/ton of propylene supplied to the prepolymerisation and first slurry reactor combined. The transition procedure was operated as follows.

**General Transition Timing Protocol relative to flush at time zero**

- - 5,0 h Single site catalyst readied in catalyst feed tank
- -1,0 h Antistatic feed was started into the prepolymerisation reactor (SPAN 80)
- - 0,5 h Hydrogen feed to the second polymerisation was adjusted to reflect that required for target second polymer product;
- - 0,1 h The external donor feed was stopped
- - 0,1 h The ZN catalyst feed was stopped;
- 0 h TEAL flush 170 g/ton of C3 supplied to lower part of the catalyst feed line and flushed to the prepolymerisation reactor and subsequently through the loop and gas phase reactors;
- +2.0 h The TEAL feed was changed to 2,5 g/ ton C3 based on the amount of C3 feed to the prepolymerisation and slurry reactor combined
- + 2.1 h Single site catalyst feed started
- + 2,2 h The second prepolymerisation conditions were adjusted to reflect those required for the second polymer product
- + 2,3 h The second slurry phase conditions were adjusted to reflect those required for the second polymer product
- + 2,4 h The second gas phase conditions were adjusted to reflect those required for the second polymer product
- + 2,6-4.1 h Take GPR into operation when loop production is over 25 from the maximum production.

Conditions within the polymerisation reactors are described in detail in table 2

Table 2

| Example | CE02 | IE03 |
|---|---|---|
| Experiment | No TEAL feed | High TEAL flush between the catalyst change |
| Product type | h-PP | h-PP |
| **Prepolymerisation reactor** | | |
| Temp. (°C) | 20 | 20 |
| Press. (kPa) | 5391 | 5242 |
| Catalyst feed (g/h) | 4.4 | 3.1 |
| TEAL feed (g/h) | 0 | 0,63 |
| TEAL feed (g/ t C3) | 0.0 | 2.5 |
| $H_2$ (g/h) | 0.2 | 0.2 |
| Feed $H_2$/C3 ratio (mol/kmol) | 0.1 | 0.0 |
| C3 feed (kg/h) | 65 | 65 |
| Residence time (h) | 0.3 | 0.3 |
| Production rate (kg/h) | 1.5 | 1.6 |
| **Loop reactor** | | |
| Temp. (°C) | 75.0 | 75.0 |
| Press. (kPa) | 5381 | 5277 |
| C3 feed (kg/h) | 185 | 185 |
| Calculated $H_2$/C3 ratio (mol/kmol) | 0.1 | 0.2 |
| Feed $H_2$/C3 ratio (mol/kmol) | 0.1 | 0.1 |
| Production rate (kg/h) | 33.8 | 36.8 |
| Solid Concentration (wt.-%) | 21.2 | 24.4 |
| Polymer Split (wt.-%) | 81 | 63 |
| Polymer residence time (h) | 0.4 | 0.5 |
| $MFR_2$ (g/10 min) | 5.7 | 5.2 |
| **Gas Phase Reactor** | | |
| Temp. (°C) | 80 | 80 |
| Press. (kPa) | 2499 | 2500 |
| $H_2$ feed (g/h) | 16 | 17 |
| $H_2$/C3 ratio (mol/kmol) | 2 | 2 |
| Polymer Split (wt.-%) | 20 | 37 |
| Residence time (h) | 4.5 | 2.4 |
| $MFR_2$ (g/10 min) | 6.3 | 9.0 |
| **Total reactors and final PP powder** | | |
| Total Production rate from Silo(kg/h) | 42.0 | 58.6 |
| Total productivity (kg PP/g cat) | 9.7 | 18.7 |
| $MFR_2$ (g/10 min) | 6.57 | 9.25 |

(continued)

| Total reactors and final PP powder | | |
|---|---|---|
| XS (wt-%) | 1.2 | 0.69 |
| Bulk Density (kg/m3) | 390 | 428 |
| PS < 0,106 mm | 0.02 | 0.04 |
| **Example** | **CE02** | **IE03** |
| PS > 0,106 mm | 0.19 | 0.17 |
| PS > 0,250 mm | 0.88 | 0.36 |
| PS > 0,355 mm | 66.3 | 49.1 |
| PS > 0,850 mm | 32 | 48.5 |
| PS > 2,0 mm | 0.57 | 1.79 |
| PS > 4,0 mm | 0.04 | 0 |
| APS (mm) | 0.877 | 1.042 |
| Tm (°C) | 155.3 | 155.3 |
| Tcr (°C) | 113.9 | 117.4 |

By using TEAL flush 170 g/ t propylene / h for 2 hours between use of ZN and single site catalysts the following improvements were seen:

- Total productivity was better.
- Better reactor balance, i.e. better production split between reactors
- Less amorphous fraction, lower XS.
- Good average particle size and PSD of the final PP powder.
- Better bulk density of the final PP powder.
- Shorter time to reach normal production.
- No major changes in the thermal character.

## Claims

**1.** A process for transitioning between two different catalysts during the production of polypropylene homo- or copolymers in a continuous multistage polymerisation reaction , the process comprising the steps of:

a) polymerising propylene and optionally comonomers in a multi stage polymerisation reactor system comprising a prepolymerization reactor, a subsequent slurry reactor and thereafter a gas phase reactor in the presence of a first catalyst;
b) discontinuing the feed of the first catalyst to the prepolymerization reactor;
c) subsequently introducing, propylene, optionally comonomers, and a second catalyst into the prepolymerization reactor, and further introducing an aluminium alkyl into the polymerization reactor simultaneously with the introduction of the second catalyst;
d) polymerising propylene and optionally comonomers in the multistage polymerisation reactor system in the presence of the second catalyst;

wherein the first catalyst is a Ziegler-Natta catalyst and the second catalyst is a single site catalyst; and wherein the amount of aluminium alkyl fed in step c) is 0.5 to 10.0 g per ton of total propylene fed into the prepolymerisation reactor and the slurry reactor in steps c) and d).

**2.** A process for transitioning between two different catalysts during the production of polypropylene homo- or copolymers in a continuous multistage polymerisation reaction, the process comprising the steps of:

a) polymerising propylene and optionally comonomers in a multi stage polymerisation reactor system comprising

a prepolymerization reactor, a subsequent slurry reactor and thereafter a gas phase reactor in the presence of a first catalyst;
b) discontinuing the feed of the first catalyst to the prepolymerization reactor;
c) subsequently introducing propylene, optionally comonomers, and a second catalyst into the prepolymerization reactor;
d) polymerising propylene and optionally comonomers in the multi stage polymerisation reactor system in the presence of the second catalyst;

wherein the first catalyst is a Ziegler-Natta catalyst and the second catalyst is a single site catalyst;
wherein between steps b) and c), propylene and an aluminium alkyl are introduced into the prepolymerisation reactor where the amount of aluminium alkyl is 100 to 300 g/ton of propylene introduced in this step;
and preferably wherein the amount of the aluminium alkyl fed in step c) is 0.5 to 10.0 g per ton of total propylene fed into the prepolymerisation reactor and the slurry polymerisation reactor in steps c) and d).

**3.** A process as claimed in claim 1 wherein the amount of aluminium alkyl fed in step c) is 0.5 to 5.0 g per ton, such as 1.0 to 3.0 g per ton of total propylene fed to into the prepolymerisation reactor and the slurry polymerisation reactor from the time the second catalyst is introduced into the prepolymerisation reactor.

**4.** A process as claimed in claim 2 wherein the amount of aluminium alkyl fed between steps b) and c) is 150 to 200 g of aluminium alkyl per ton of propylene fed between steps b) and c).

**5.** A process as claimed in claim 2 or 4 wherein the step between steps b) and c) of introducing propylene and an aluminium alkyl into the prepolymerisation reactor as flush lasts for 0.5 to 4 hrs, such as 1 to 3 hrs.

**6.** A process as claimed in any preceding claim wherein the aluminum alkyl is triethyl-aluminium (TEAL), tri-isobutyl-aluminium (TIBA) or a mixture thereof.

**7.** The process as claimed in any preceding claim wherein the transition from first catalyst to the second catalyst is performed in the absence of any additional agent, such as carbon monoxide, which deactivates or kills the Ziegler-Natta catalyst.

**8.** The process as claimed in any of preceding claim, wherein the Ziegler-Natta catalyst used is a solid Ziegler-Natta catalyst selected from a $MgCl_2$-supported titanium Ziegler Natta catalyst and a self-supported solid Ziegler Natta catalyst.

**9.** The process as claimed in any preceding claim wherein an external donor to the first catalyst is used in step a), such as an external donor selected from the group consisting of di-iso-propyldiethoxysilane (DIPDES), cyclohexylmethyl-diethoxysilane (CHMDES), dicyclopentyldimethoxysilane, cyclohexylmethyldimethoxysilane and dicyclopentadienyldiethoxysilane (DCPDES) and diethylaminotriethoxysilane.

**10.** The process as claimed in any preceding claim, wherein the first catalyst of step a) is used in combination with a co-catalyst which is triethyl aluminium (TEAL), especially wherein the amount of TEAL used in the prepolymerisation reactor of step a) is at least 20 g of TEAL /ton of total propylene added to the prepolymerisation reactor and the slurry reactor of step a).

**11.** The process as claimed in any of preceding claim, wherein the single site catalyst is a metallocene catalyst.

**12.** The process as claimed in claim 11, wherein the metallocene catalyst comprises as catalyst components an organometallic compound of a transition metal of formula (I):

$$(L)_m R_n M X_q \qquad (I)$$

wherein

"M" is a transition metal (M) transition metal (M) of Group 3 to 10 of the Periodic Table (IUPAC 2007);
each "X" is independently a monoanionic ligand, such as a $\sigma$-ligand;
each "L" is independently an organic ligand which coordinates to the transition metal "M";
"R" is a bridging group linking said organic ligands (L);

"m" is 1, 2 or 3, preferably 2;
"n" is 0, 1 or 2, preferably 1;
"q" is 1, 2 or 3, preferably 2; and
m+q is equal to the valency of the transition metal (M);
and a cocatalyst.

**13.** The process as claimed in claim 9 wherein the external donor feed in step a) to the first prepolymerisation reactor is discontinued before or at the same time as the feed of the first catalyst is discontinued.

**14.** The process as claimed in any preceding claim wherein the second catalyst is fed via a catalyst feed line to the prepolymerisation reactor along with the aluminium alkyl.

**15.** The process as claimed in claim 1 wherein the amount of aluminium alkyl introduced into the prepolymerisation reactor is reduced from 150 to 200 g/ton of propylene (based on the amount of propylene fed into the prepolymerisation reactor and the slurry polymerisation reactor in steps a)) to 0.5 to 10 g per ton of propylene (based on the amount of propylene fed into the prepolymerisation reactor and the slurry polymerisation reactor in steps c) and d)) before the second catalyst is introduced .

**16.** The process as claimed in any preceding claim, wherein the polypropylene is a propylene homopolymer.

**17.** The process as claimed in any preceding claim wherein the polymerization conditions within the prepolymerisation and slurry reactors of step a) are adjusted to reflect the conditions needed in the prepolymerisation and slurry reactors of step d) after the feed of the first catalyst is discontinued.

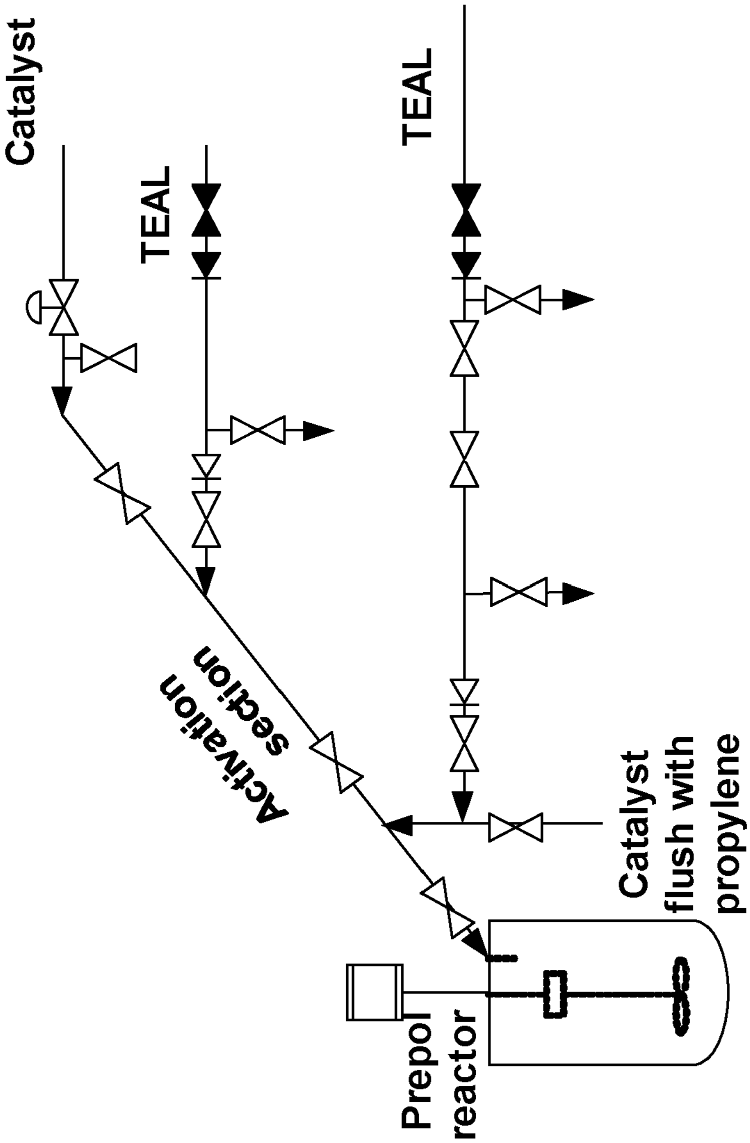
Catalyst
TEAL
TEAL
Activation section
Catalyst flush with propylene
Prepol reactor

*Figure 1.*

Europäisches Patentamt
European Patent Office
Office européen des brevets

# EUROPEAN SEARCH REPORT

Application Number
EP 22 21 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 316 566 B1 (FINA TECHNOLOGY [US]) 30 March 2005 (2005-03-30)<br>* paragraphs [0001], [0009], [0151] - [0159] *<br>* examples 1-5 *<br>* claims 1-15 *<br>----- | 1-17 | INV.<br>C08F110/06 |
| A | EP 2 216 347 A1 (BOREALIS AG [AT]) 11 August 2010 (2010-08-11)<br>* paragraphs [0001], [0004] *<br>* claims 1-8 *<br>----- | 1-17 | |
| A | EP 3 237 458 B1 (SABIC GLOBAL TECHNOLOGIES BV [NL]) 22 June 2022 (2022-06-22)<br>* paragraphs [0001], [0012] *<br>* claims 1-12 *<br>----- | 1-17 | |

TECHNICAL FIELDS SEARCHED (IPC)

C08F

The present search report has been drawn up for all claims

1

| Place of search | Date of completion of the search | Examiner |
|---|---|---|
| Munich | 9 May 2023 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 21 5204

This annex lists the patent family members relating to the patent documents cited in the above-mentioned European search report. The members are as contained in the European Patent Office EDP file on
The European Patent Office is in no way liable for these particulars which are merely given for the purpose of information.

09-05-2023

| Patent document cited in search report | Publication date | Patent family member(s) | Publication date |
|---|---|---|---|
| EP 1316566 B1 | 30-03-2005 | AT 292149 T | 15-04-2005 |
| | | AT 402963 T | 15-08-2008 |
| | | BR 0204898 A | 15-06-2004 |
| | | CN 1422875 A | 11-06-2003 |
| | | CN 1763109 A | 26-04-2006 |
| | | DE 60203472 T2 | 27-04-2006 |
| | | EP 1316566 A2 | 04-06-2003 |
| | | EP 1526143 A2 | 27-04-2005 |
| | | ES 2238542 T3 | 01-09-2005 |
| | | JP 4627965 B2 | 09-02-2011 |
| | | JP 2003192717 A | 09-07-2003 |
| | | KR 20030045647 A | 11-06-2003 |
| | | MX PA02011729 A | 22-09-2003 |
| | | TW I258483 B | 21-07-2006 |
| | | US 2003114608 A1 | 19-06-2003 |
| | | US 2005159563 A1 | 21-07-2005 |
| | | US 2005165181 A1 | 28-07-2005 |
| | | US 2008114135 A1 | 15-05-2008 |
| | | US 2011207898 A1 | 25-08-2011 |
| EP 2216347 A1 | 11-08-2010 | EP 2216347 A1 | 11-08-2010 |
| | | WO 2010086392 A1 | 05-08-2010 |
| EP 3237458 B1 | 22-06-2022 | BR 112017013299 A2 | 02-01-2018 |
| | | CN 107207650 A | 26-09-2017 |
| | | EA 201791427 A1 | 31-01-2018 |
| | | EP 3237458 A1 | 01-11-2017 |
| | | JP 2018501395 A | 18-01-2018 |
| | | KR 20170109548 A | 29-09-2017 |
| | | US 2018186906 A1 | 05-07-2018 |
| | | WO 2016102546 A1 | 30-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0751965 A
- EP 1578808 A
- EP 1620472 A
- EP 3237458 A
- EP 3394111 A
- EP 1182216 A
- WO 2010086392 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 629631 A
- EP 629632 A
- WO 0026266 A
- WO 02002576 A
- WO 02002575 A
- WO 9912943 A
- WO 9840331 A
- EP 776913 A
- EP 1074557 A
- WO 9942497 A
- EP 2402353 A
- EP 2729479 A
- EP 2746289 A
- WO 0170395 A
- WO 9710248 A
- WO 9941290 A
- WO 9910353 A
- EP 260130 A
- WO 9728170 A
- WO 9846616 A
- WO 9849208 A
- WO 98040331 A
- WO 9912981 A
- WO 9919335 A
- WO 9856831 A
- WO 0034341 A
- WO 00148034 A
- EP 423101 A
- EP 537130 A
- WO 200202576 A
- WO 2005105863 A
- WO 2006097497 A
- WO 2007116034 A
- WO 2007107448 A
- WO 2009027075 A
- WO 2009054832 A
- WO 2012001052 A
- EP 2532687 A
- WO 2011135004 A
- WO 2012084961 A
- WO 2011076780 A
- WO 2015158790 A
- WO 9414856 A
- WO 9512622 A
- WO 03051934 A
- EP 0887379 A
- WO 9212182 A
- WO 2005002744 A
- WO 2019179959 A1

**Non-patent literature cited in the description**


- **V. C. GIBSON et al.** *Angew. Chem. Int. Ed., engl.,* 1999, vol. 38, 428-447
- *CHEMICAL ABSTRACTS,* 7550-45-90